# FASCICULE DE BREVET EUROPEEN

(11) **EP 1 750 503 B1**
(45) Date de publication et mention de la délivrance du brevet: **02.09.2015**
(21) Numéro de dépôt: 05773209.1
(22) Date de dépôt: 20.05.2005
(51) Int. Cl.: A01N 25/04

(54) **FORMULATION SOLIDE COMPRENANT UN PRODUIT PHYTOSANITAIRE**
FESTE FORMULIERUNG MIT EINEM PFLANZENSCHUTZPRODUKT
SOLID FORMULATION CONTAINING A PHYTOSANITARY PRODUCT

(30) Priorité: 28.05.2004 FR 0405801
(43) Date de publication de la demande: 14.02.2007
(73) Titulaire: RHODIA CHIMIE, 92512 Boulogne Billancourt Cedex (FR)
(72) Inventeur: HECAEN, Jean-Pierre, 93240 Stains (FR); CHIOVATO, Alessandro, 69490 Anse (FR); BALASTRE, Marc, 75020 Paris (FR); MALEZIEUX, Natividad, 93270 Sevran (FR)
(86) Numéro de dépôt international: PCT/FR2005/001267
(87) Numéro de publication internationale: WO 2006/000671

(56) Documents cités:
- EP-A- 0 253 682
- WO-A-01/93679
- WO-A-02/078674
- WO-A-02/082900
- WO-A-03/039249
- BOEHM A L ET AL: "Nanoprecipitation technique for the encapsulation of agrochemical active ingredients." JOURNAL OF MICROENCAPSULATION, vol. 20, no. 4, juillet 2003 (2003-07), pages 433-441, XP009045480 ISSN: 0265-2048

## Description

La présente invention a pour objet une formulation solide comprenant une composition liquide comprenant un produit phytosanitaire solide non soluble dans l'eau. Plus particulièrement, l'invention concerne une formulation solide permettant la formation de nanoparticules du produit phytosanitaire lors d'une dispersion dans l'eau.

L'agriculture utilise de nombreuses matières actives telles que des fertilisants ou des pesticides, par exemple des insecticides, herbicides ou fongicides. On parle de produits phytosanitaires. Ces matières actives ou produits phytosanitaires sont généralement produits sous forme pure ou très concentrée. Ils doivent être utilisés sur les exploitations agricoles à de faibles concentrations. A cette fin, les matières actives sont généralement formulées avec d'autres ingrédients afin de permettre une dilution en poids aisée par l'exploitant agricole. On parle de formulations phytosanitaires. La dilution opérée par l'exploitant agricole est généralement réalisée par mélange de la formulation phytosanitaire avec de l'eau.

Ainsi les formulations phytosanitaires doivent permettent une dilution en poids aisée par l'exploitant agricole, afin d'obtenir un produit dans lequel le produit phytosanitaire est correctement dispersé, par exemple sous forme de solution, d'émulsion, de suspension, ou de suspo-émulsion. Les formulations phytosanitaires permettent ainsi le transport d'un produit phytosanitaire sous forme relativement concentrée, un conditionnement aisé et/ou une manipulation aisée pour l'utilisateur final. Différents types de formulations phytosanitaires peuvent être utilisés selon les différents produits phytosanitaires. On cite par exemple les concentrés émulsionnables (Emulsifiable Concentrates «EC»), les poudres mouillables (Wettable Powders «WP»), des granulés dispersables dans l'eau (Water Dispersible Granules, «WDG»). Les formulations qu'il est possible d'utiliser dépendent de la forme physique du produit phytosanitaire (par exemple solide ou liquide), et de ses propriétés physico-chimiques en présence d'autres composés comme l'eau ou les solvants.

Après dilution en poids par l'exploitant agricole, par exemple par mélange avec de l'eau, le produit phytosanitaire peut se trouver sous différentes formes physiques: solution, dispersion de particules solides, dispersion de gouttelettes du produit, gouttelettes de solvant dans lequel le produit est dissous... Les formulations phytosanitaires comprennent généralement des composés permettant d'obtenir ces formes physiques. Il peut par exemple s'agir de tensioactifs, de solvants, de supports minéraux, ou de dispersants. Bien souvent ces composés n'ont pas un caractère actif, mais un caractère intermédiaire d'aide à la formulation. On souhaite donc bien souvent en limiter la quantité afin de limiter les coûts et/ou une éventuelle nocivité pour l'environnement. Les formulations phytosanitaires peuvent notamment être sous forme liquide, ou sous forme solide, par exemple sous forme de poudre ou de granulés. Les formulations phytosanitaires peuvent notamment se présenter sous la forme de nanosphères encapsulant un produit phytosanitaire (Boehm et al, Journal of Microencapsulation, 2003, 20(4)).

Les documents WO 01/33679 et EP 0 253 682 décrivent une formulation sous forme d'une suspension liquide comprenant un produit phytosanitaire solide.

Le document WO 02/082900 décrit des nanoparticules comprenant un produit phytosanitaire et de relativement faibles quantités d'un composé amphiphile. Ces nanoparticles peuvent présenter des avantages par rapport à des particules de taille supérieure, par exemple une efficacité augmentée. Le document décrit ainsi la génération de nanoparticles par mélange d'une composition liquide avec de l'eau.

-Pour des raisons pratiques, on peut préférer vouloir utiliser des formulations phytosanitaires sous forme solide. De telles formulations présentent l'avantage d'être aisément manipulées ou conditionnées, et d'être aisément transportables.

-Le document WO 03/039249 décrit une formulation solide comprenant un produit phytosanitaire et un copolymère amphiphile pouvant former des nanoparticules de produit phytosanitaire après dispersion dans l'eau.

Le document WO 02/078674 décrit un procédé de préparation de nanoparticules, par une technique de co-précipitation mettant en oeuvre le mélange d'un copolymère amphiphile et d'un produit phytosanitaire, la composition liquide étant ensuite transformée en poudre par lyophilisation. Les formulations décrites dans ces deux documents ne comprennent pas de composition liquide incorporant le produit phytosanitaire.

On a à présent trouvé un nouveau type de formulations phytosanitaires, présentant les avantages mentionnées ci-dessus en terme de transport, conditionnement, transport, ainsi qu'en terme d'efficacité.

Ainsi, l'invention propose une formulation solide comprenant une composition liquide comprenant un produit phytosanitaire solide non soluble dans l'eau, dispersée, absorbée ou adsorbée, dans une matrice organique ou minérale, caractérisée en ce que:
- le produit phytosanitaire est non-hydrosoluble à 25°C,
- la composition liquide comprend:
   - au moins 5 parts en poids, de préférence au moins 25 parts, de préférence au moins 50 parts, du produit phytosanitaire,
   - un solvant dans lequel le produit phytosanitaire est solubilisé, et
   - 100 parts en poids d'au moins un composé amphiphile,
- le solvant, le composé amphiphile et leurs proportions étant tels que leur mélange dans les conditions d'utilisation, en présence éventuellement de la matrice organique ou d'un agent liant et/ou dispersant compris dans la matrice minérale ou organique, est au moins partiellement miscible avec l'eau,
- et en ce que la formulation solide forme, après mélange avec de l'eau, une dispersion dans l'eau de nanoparticules comprenant le produit phytosanitaire.

L'invention concerne aussi un procédé de préparation de nanoparticules comprenant un produit phytosanitaire, comprenant une étape de mélange de la formulation solide avec de l'eau. Ce précédé est avantageusement mis en oeuvre par l'exploitant agricole. De ce fait, pour les formulations solides, on peut parler de formulation pour mélange en réservoir («tank-mix»).

La possibilité de générer des nanoparticules à partir de formulations solides, dans lequel le produit phytosanitaire est dispersé, absorbé ou adsorbé, et présente donc des propriétés physico-chimiques modifiées, par exemple des propriétés d'interface, constitue un effet surprenant.

### Définitions

Dans la présente demande, un produit non-hydrosoluble désigne un produit qui, à 1% en poids dans de l'eau distillée, à 25°C, présente une séparation macroscopique de phases.

Dans la présente demande, un liquide ou mélange miscible avec l'eau désigne un liquide ou mélange qui ne présente pas de séparation macroscopique de phases de 0% (exclu) à 99% en poids par rapport au poids total du mélange d'eau et du liquide ou mélange, à 25°C.

Dans la présente demande, un liquide ou mélange partiellement miscible avec l'eau désigne un liquide ou mélange qui ne présente pas de séparation macroscopique de phases de 0% (exclu) 25% en poids par rapport au poids total du mélange d'eau de du liquide ou mélange, à 25°C.

Dans la présente demande, des nanoparticules désignent des particules solides de taille inférieure à 1060 nm. Les nanoparticules sont généralement sous forme dispersée dans un liquide. La taille des particules est définie comme le diamètre médian en poids ou volume, pouvant être mesuré à l'aide d'un appareil de type Malvern Mastersizer S (par exemple version 2.18), avec un model théorique polydisperse et une présentation de type Standard-Wet (30HD) prenant une hypothèse de suspension dans l'eau. Le diamètre médian en poids ou volume est celui pour lequel 50% en poids ou volume de l'échantillon mesuré présente un diamètre inférieur et 50% en poids de l'échantillon mesuré présente un diamètre supérieur. Il n'est pas exclu que les nanoparticules comprennent des particules de taille supérieure à 1060 nm. De préférence au moins 75% en poids ou volume des nanoparticules ont un diamètre inférieur à 1060 nm, et encore plus préférablement inférieur à 400 nm. La taille de particules, est mesurée en l'absence de support minéral ou organique matrice. Si de dernier est présent dans la dispersion, il est éliminé par exemple par décantation et/ou filtration avant mesure.

### Modes de réalisation généraux des formulations solides

Selon un premier mode de réalisation, la formulation solide est une émulsion séchée (EG), comprenant une matrice organique dans laquelle sont dispersées des inclusions de la composition liquide. La matrice des émulsions séchées comprend généralement un polymère hydrosoluble ou hydrodispersable. Des émulsions séchées, et leurs procédés de préparation sont notamment décrites dans les documents WO 97/15385 (R 95139G1), WO 00/26280 (R 98145), WO 02/32563 (R 00137), WO 03/006148 (R 01103), WO 99/55819, US 3971852, WO 97/15386 (R 95140), WO 97/15387 (R 95141), WO 99/38611 (R 98011) et WO 99/38945 (R 98010).

Selon un deuxième mode de réalisation, la formulation solide est une poudre mouillable (WP) comprenant un support minéral ou organique matrice dans lequel est absorbée ou adsorbée la composition liquide, et comprenant un agent favorisant la dispersion du support minéral dans de l'eau.

Selon un troisième mode de réalisation, la formulation solide est un granulé solide dispersable dans l'eau (WDG), comprenant un agglomérat d'un support minéral ou organique matrice dans lequel est absorbée ou adsorbée la composition liquide, et comprenant éventuellement un agent liant et/ou dispersant, favorisant la dispersion dans l'eau du support. Le support minéral matrice est généralement une poudre agglomérée pour former le granulé. La poudre peut typiquement présenter une granulométrie de 0,5 à 50 µm. Un granulé peut typiquement présenter une granulométrie d'au moins 0,1 mm de diamètre, par exemple de 0,1 à 3 mm de diamètre. Dan le cas où le granulé est préparé par extrusion, le granulé peut typiquement avoir une forme cylindrique, de section circulaire ou autre, de longueur de 1 à 6 mm et de diamètre ou largeur de 0,2 à 2 mm. Après dispersion dans l'eau, sous agitation modérée, le granulé est dé-aggloméré, et le support minéral ou organique matrice forme des petite particules en suspension, qui peuvent passer à travers des dispositifs de pulvérisation. Selon un mode avantageux le granulé est tel qu'après agitation de 5 minutes dans l'eau, il y a un résidu de particules dé-agglomérées inférieur à 0.01% en poids sur un tamis de 150 µm, et avantageusement inférieur à 0,5% en poids sur un tamis de 53 µm.

### Ingrédients

On détaille ci-dessous les différents types d'ingrédients qui peuvent être compris dans les formulations solides selon l'invention.

### Produit phytosanitaire

A titre d'exemples non limitatifs de matières actives convenables, on peut citer entre autres l'Amétryne, le Diuron, le Linuron, le Chlortoluron, l'Isoproturon, le Nicosulfuron, le Metamitron, le Diazinon, l'Aclonifen, l'Atrazine, le Chlorothalonil, le Bromoxynil, le Bromoxynil heptanoate, le Bromoxynil octanoate, le Mancozeb, la Manèbe, le Zineb, la Phenmédipham, le Propanyl, la série des phénoxyphénoxy, la série des hétéroaryloxyphénoxy, le CMPP, le MCPA, le 2,4-D, la Simazine, les produits actifs de la série des imidazolinones, la famille des organophosphorés, avec notamment l'Azinphos-éthyl, l'Azinphos-méthyl, l'Alachlore, le Chlorpyriphos, le Diclofop-méthyl, le Fénoxaprop-p-éthyl, le Méthoxychlore, la Cyperméthrine, le Fenoxycarbe, le cymoxanil, le chlorothalonyl, Ikes insecticides neonicotinoides, la famille des fongicide triazoles tels que l'azaconazole, bromuconazole, cyproconazole, difenoconazole, diniconazole, epoxyconazole, fenbuconazole, flusilazole, myclobutanyl, tebuconazole, triadimefon, triadimenol, des strobilurines telles que la pyraclostrobine, la picoxystrobine, l'azoxystrobine, la famoxadone, le kresoxym-methyl et la trifloxystrobine, les solfonylurées telles que le bensulfuron-methyl, le chlorimuron-ethyl, le chlorsulfuron, le metsulfuron-methyl, le nicosulfuron, le sulfomethuron-methyl, le triasulfuron, le tribenuron-methyl.

On choisi parmi cette liste les produits non-hydrosolubles.

### Solvant

La composition liquide comprend un solvant, dans lequel le produit phytosanitaire est dissous. Il s'agit d'un solvant différent de l'eau. La nature du solvant dépend du produit phytosanitaire. A titre de solvants souvent utilisés dans les formulations phytosanitaire, on cite les coupes hydrocarbonées telles que les Solvesso, les esters en C₁-C₄ d'acides gras, les alcools tels que le méthanol.

Des solvants pouvant être mis en oeuvre incluent notamment:
- les esters d'acides mono- ou di- carboxyliques saturés ou non, linéaires ou ramifiés, comprenant 2 à 15 atomes de carbone, comprenant éventuellement un groupement alcoxy, de préférence méthoxy, ou hydroxyle, et de monoalcool ou de polyol, saturé ou non, linéaire ou ramifié, comprenant 1 à 13 atomes de carbone;
- les mono-, di- et/ou tri- ester phosphates, comprenant des groupes alkyles en C₂-C₅, les alkyles phosphonates, avec un groupe alkyle en C₂-C₅, par exemple le tributylphosphate (TBP);
- les cétones pour lesquelles les radicaux, identiques ou différents, sont des radicaux alkyles, linéaires ou ramifiés, comprenant 1 à 5 atomes de carbone ;
- les dérivés hétérocycliques comprenant au moins un azote et/ou au moins un oxygène et/ou au moins un soufre ;
- les mono- ou poly-éthers de polyalcools ;
- le DMSO (diméthylsulfoxyde);
- les esters de l'acide lactique ;
- le carbonate de glycérol ;
- le THFA (Alcool tétrahydrofurfurylique) ;
- les dimethylamide d'acides carboxyliques, par exemple commercialisés par la société Clariant sous la dénomination Genagene; notamment décrits dans le document US 5,206,225;
- les esters de lactates, par exemples commercialisés par la société Purac, notamment décrits dans le document WO 03/075657;
- seuls ou en mélange.
Cette liste n'est pas exhaustive.

En ce qui concerne les esters d'acides carboxyliques, ces derniers peuvent être plus particulièrement choisis parmi les esters des acides acétique, caprylique, octanoïque, décanoïque, dodécanoïque, laurique, lauroléique, seuls ou en mélanges. Au cas où l'acide est un acide dicarboxylique, de préférence les deux fonctions carboxyliques se trouvent sous forme estérifiée. Par ailleurs, l'alcool à partir duquel est formé l'ester, est de préférence un monoalcool.

On ne sortirait pas du cadre de la présente invention en mettant en oeuvre les produits issus de l'alcoolyse (plus particulièrement méthanolyse, éthanolyse) de triglycérides d'origine animale ou de préférence végétale. A titre d'exemples de triglycérides convenables, on peut citer l'huile d'arachide, l'huile de graine de coton, l'huile de lin, l'huile d'olive, l'huile de palme, l'huile de pépin de raisin, l'huile de soja, l'huile de ricin, l'huile de colza, l'huile de coprah, l'huile de noix de coco.

Parmi les cétones convenables, on peut mentionner l'acétone, la méthyl éthyl cétone, la méthyl isobutyl cétone, seules ou en mélange.

Pour ce qui a trait aux dérivés hétérocycliques comprenant au moins un azote et/ou un oxygène et/ou un soufre, conviennent notamment la N-méthyl pyrrolidone, le tétrahydrofurane, le dioxane, etc. ; la N-méthyl pyrrolidone étant préférée.

Quant aux mono- ou poly-éthers de polyalcools, ils sont de préférence tels que la ou les parties éthers comprennent un ou plusieurs radicaux alkyles comprenant de 1 à 4 atomes de carbone. Quant à la partie dérivant du polyalcool, cette dernière est de préférence du type polyéthylène glycol, A titre d'exemple, on peut utiliser le méthyldiglycol.

### Polymère hydrosoluble ou hydrodispersable de matrice organique

Tout polymère hydrosoluble ou hydrodispersable adapté à la réalisation d'émulsions séchées peut être utilisé. Le polymère peut être par exemple choisi parmi l'alcool polyvinylique (APV), les amidons éventuellement modifiés, les copolymères d'acide (meth)acrylique ou d'anhydride maléique et de di-isobutylène. Des polymères convenant à la mise en oeuvre de ce mode de réalisation sont notamment décrits dans les documents WO 97/15385 (R 95139G1), WO 00/26280 (R 98145), WO 02/32563 (R 00137), WO 03/006148 (R 01103), WO 99/55819, US 3971852, WO 97/15386 (R 95140), WO 97/15387 (R 95141), WO 99/38611 (R 98011) et WO 99/38945 (R 98010). On cite à titre d'exemple le Geropon EGPM, commercialisé par Rhodia.

### Support minéral matrice

Le support minéral matrice est généralement une charge minérale insoluble dans l'eau ayant la capacité d'absorber ou d'adsorber un liquide. La charge minérale peut être plus ou moins poreuse, et présenter une plus ou moins grande surface spécifique. On note que la charge minérale peut être sous forme d'une poudre. Les grains de la poudre peuvent eux même être constitués d'agglomérats et/ou d'agrégats d'objets de plus petite taille (particules ou agrégats de particules).

Le support minéral matrice peut ainsi être choisi parmi:
- de la silice, de préférence une silice de précipitation,
- des composés minéraux comprenant du phosphore,
- les silicates ou métasilicates de composés alcalins ou alcalino-terreux,
- des carbonates de composés alcalins ou alcalino-terreux,
- du noir de carbone,
- des argiles, ou
- des mélanges de ces composés.

Les charges minérales mises en oeuvre peuvent avoir une surface spécifique, mesurée selon les méthodes BET (déterminée selon la méthode de BRUNER-EMET-TELLER décrite dans « The Journal of the American Chemical Society», Vol. 60, page 309, février 1938, et correspondant à la norme NFT 45007 (novembre 1997)), d'au moins 50 m²/g, notamment comprise entre 50 et 400 m²/g, de préférence supérieure à 70 m²/g. Elles peuvent présenter en outre une densité apparente inférieure à 200 g/l. Elles peuvent présenter une prise d'huile DOP d'au moins 200 ml/g (déterminée selon la norme ISO 787/5 en mettant en oeuvre du dioctylphtalate). Il peut par exemple s'agir d'une silice de précipitation présentant une prise d'huile DOP d'au moins 200 ml/g.

La charge minérale peut être choisie parmi la silice, le quartz broyé, les argiles calcinées, ou encore les terres de diatomées, les oxydes, hydroxydes ou sulfates d'éléments des colonnes IIA, IIIB de la classification périodique des éléments, le mica, le gypse, seuls ou en mélanges.

La silice est de préférence une silice de précipitation. De préférence il ne s'agit pas d'une silice calcinée. Elle peut éventuellement avoir subi un traitement de surface visant à l'hydrophober. Il est à noter que ce traitement peut être effectué préalablement ou in situ. Classiquement, le traitement d'hydrophobation consiste à contacter la silice avec un ou plusieurs composés organosiliciques. Parmi ces composés on peut citer les méthylpolysiloxanes tels que l'hexaméthyldisiloxane, l'octaméthylcyclotétrasiloxane ; les méthylpolysilazanes comme l'hexaméthyldisilazane, l'hexaméthylcyclotrisilazane ; les chlorosilanes comme le diméthyldichlorosilane, le triméthylchlorosilane, le méthylvinyldichlorosilane, le diméthylvinylchlorosilane ; les alcoxysilanes comme le diméthylméthoxysilane, les résines MQ. Lors de ce traitement, les silices peuvent accroître leur poids de départ jusqu'à un taux de 20 %.

A titre d'exemple de support minéral matrice (charge minérale) pouvant être mis en oeuvre, on cite la silice Tixosil® 38 AB commercialisée par Rhodia.

Le support minéral matrice peut aussi être une charge minéral choisie parmi les silicates ou métasilicates de calcium ou magnésium, le dioxyde de titane, les oxyde d'aluminium, zinc ou calcium, les carbonates de calcium, zinc ou magnésium, les sulfates de sodium, ammonium, calcium, la bentonite, le kaolin, l'attapulgite, les zeolites, le sodium potassium fusionné, les silicates d'aluminium (perlite traitée par la chaleur) ou le noir de carbone.

La taille de la charge minérale est de préférence inférieure à 150 µm, après dispersion de la formulation solide dans l'eau. Elle est de préférence comprise entre 2 et 50 µm. Des charges de grande taille peuvent poser des problèmes de mise en oeuvre dans les dispositifs agricoles.

### Composé amphiphile

Sans vouloir être lié une quelconque théorie, on pense que le composé amphiphile aide à la stabilisation et/ou à la formation des nanoparticules. Il peut aussi aider, dans une certaine mesure, à une compatibilisation de la composition solide avec la matrice organique ou minérale, ou à une facilitation de la mise en présence de la composition liquide avec les autres composés. Dans le cadre d'émulsions séchées, le composé amphiphile peut aider à la formation de l'émulsion.

Le composé amphiphile comprend deux parties distinctes et non mélangées: une partie hydrophobe et une partie hydrophile. A ce titre le composé amphiphile n'est pas un copolymère statistique comprenant des unités hydrophobes et des unités hydrophiles, statistiquement réparties (mélangées).

Selon un premier mode de réalisation, le composé amphiphile est un tensioactif. Les tensioactifs sont des composés connus, qui présentent une masse molaire généralement relativement faible, par exemple inférieure à 1000 g/mol. Le tensioactif peut être un tensioactif anionique sous forme salifiée ou acide, non ionique de préférence polyalcoxylé, cationique, amphotère (terme incluant aussi les tensioactifs zwitterioniques), ou un mélange de ces tensioactifs.

A titre d'exemples de tensioactifs anioniques, on peut citer, sans intention de s'y limiter:
- les acides alkylsulfoniques, les acides arylsulfoniques, éventuellement substitués par un ou plusieurs groupements hydrocarbonés, et dont la fonction acide est partiellement ou totalement salifiée, comme les acides alkylsulfoniques en C₈-C₅₀, plus particulièrement en C₈-C₃₀, de préférence en C₁₀-C₂₂, les acides benzènesulfoniques, les acides naphtalènesulfoniques, substitués par un à trois groupements alkyles en C₁-C₃₀, de préférence en C₄-C₁₆, et/ou alcényles en C₂-C₃₀, de préférence en C₄-C₁₆.
- les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en C₂-C₄ (de préférence éthoxylés, propoxylés, éthopropoxylés).
- les esters phosphates choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé, éthopropoxylé). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono- et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyles ; de l'acide phosphorique et d'un alcool en C₈-C₃₀, de préférence en C₁₀-C₂₂ alcoxylé (éthoxylé ou éthopropoxylé); de l'acide phosphorique et d'un alcool en C₈-C₂₂, de préférence en C₁₀-C₂₂, non alcoxylé.
- les esters sulfates obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en C₈-C₂₀, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en C₂-C₃₀, saturés ou insaturés, et dans lesquels le nombre de motifs alcoxylés est compris entre 2 et 40 ; les esters sulfates obtenus à partir de mono-, di- ou tristyrylphénol polyalcoxylés dans lesquels le nombre de motifs alcoxylés varie de 2 à 40.

Les tensioactifs anioniques peuvent être sous forme acide (il sont potentiellement anioniques), ou sous une forme partiellement ou totalement salifiée, avec un contre-ion. Le contre-ion peut être un métal alcalin, tel que le sodium ou le potassium, un alcalino-terreux, tel que le calcium, ou encore un ion ammonium de formule N(R)₄⁺ dans laquelle R, identiques ou différents, représentent un atome d'hydrogène ou un radical alkyle en C₁-C₄ éventuellement substitué par un atome d'oxygène.

A titres d'exemples de tensioactifs non ioniques, on peut citer, sans intention de s'y limiter:
- les phénols polyalcoxylés (éthoxylés, propoxylés, éthopropoxylés) substitués par au moins un radical alkyle en C₄-C₂₀, de préférence en C₄-C₁₂, ou substitués par au moins un radical alkylaryle dont la partie alkyle est en C₁-C₆. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés. Parmi les di- ou tristyrylphenols éthoxylés et/ou propoxylés, sulfatés et/ou phosphatés, on peut citer, le di-(phényl-1 éthyl)phénol éthoxylé, contenant 10 motifs oxyéthylénés, le di-(phényl-1 éthyl)phénol éthoxylé, contenant 7 motifs oxyéthylénés, le di-(phényl-1 éthyl)phénol éthoxylé sulfaté, contenant 7 motifs oxyéthylénés, le tri-(phényl-1 éthyl)phénol éthoxylé, contenant 8 motifs oxyéthylénés, le tri-(phényl-1 éthyl)phénol éthoxylé, contenant 16 motifs oxyéthylénés, le tri-(phényl-1 éthyl)phénol éthoxylé sulfaté, contenant 16 motifs oxyéthylénés, le tri-(phényl-1 éthyl)phénol éthoxylé, contenant 20 motifs oxyéthylénés, le tri-(phényl-1 éthyl)phénol éthoxylé posphaté, contenant 16 motifs oxyéthylénés.
- les alcools ou les acides gras en C₆-C₂₂, éventuellement polyalcoxylés (éthoxylés, propoxylés, éthopropoxylés). Dans le cas où ils sont présents, le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
- les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par trans-estérification d'un triglycéride par un polyéthylèneglycol.
- les esters de sorbitan polyalcoxylés (éthoxylés, propoxylés, éthopropoxylés), plus particulièrement les esters de sorbitol cyclisé d'acides gras de C₁₀ à C₂₀ comme l'acide laurique, l'acide stéarique ou l'acide oléique, et comprenant un nombre total de motifs alcoxylés compris entre 2 et 50.

Les tensioactifs polyalcoxylés de préférence polyéthoxylés et/ou polypropoxylés, peuvent être particulièrement préférés dans le cadre d'émulsions séchées.

Selon un deuxième mode de réalisation, le composé amphiphile est un copolymère à blocs, comprenant un bloc hydrophile, comprenant des unités hydrophiles, dérivant de monomères hydrophiles, et un bloc hydrophobe, comprenant des unités hydrophobes, dérivant de monomères hydrophobes. Le copolymère à blocs est avantageusement un copolymère dibloc. De préférence au moins un bloc, de préférence deux ou au moins deux, dérive de monomères mono-alpha-éthylèniquement-insaturés. Des exemples de copolymères à blocs convenant à ce mode de réalisation sont décrits dans le document WO 02/082900.

Il est à noter qu'il est possible d'utiliser plusieurs composés amphiphiles. Généralement le composé amphiphile pourra être un mélange de composés amphiphiles, par exemples de composés tels que détaillés ci-dessus. On peut par exemple utiliser des mélanges de copolymères à blocs et de tensioactifs.

### Agent liant et/ou dispersant

La matrice minérale ou organique peut comprendre un agent liant et/ou dispersant. La présence d'un tel agent liant et/ou dispersant est particulièrement avantageuse dans une formulation solide sous forme de granulé dispersable dans l'eau (WDG). Dans le cadre de granulés dispersables dans l'eau, l'agent liant et/ou dispersant peut permettre une agglomération du support minéral ou organique matrice, et/ou une dé-agglomération du support minéral ou organique matrice (dispersion de particules de support) lors de la dispersion dans l'eau. L'agent liant et/ou dispersant peut être un mélange de plusieurs agents liants et/ou dispersants. Dans le cadre de poudres mouillables, l'agent dispersant et/ou liant peut favoriser la dispersion du support minéral dans l'eau.

L'agent liant et/ou dispersant peut notamment être un polymère hydrosoluble ou hydrodispersable tel que décrit ci-dessus en tant que polymère hydrosoluble ou hydrodispersable de matrice organique. Le polymère peut être par exemple choisi parmi l'alcool polyvinylique (APV), les amidons modifiés, les copolymères d'acide (meth)acrylique ou d'anhydride maléique et de di-isobutylène. On cite à titre d'exemple le Geropon EGPM, commercialisé par Rhodia.

L'agent liant et/ou dispersant peut notamment être choisi parmi les composés suivants:
- les polymères hydrosolubles, de préférence les polycarboboxylates, leurs dérivés et/ou copolymères,
- les condensats de naphatlene sulfonates,
- les polymères naphtalènesulfonate/formaldéhyde condensés (sels de sodium ou d'ammonium,
- les condensats de phenyl sulfonates (sels de sodium d'acides phenyllsulfoniques),
- les polyvinyl pyrrolidone réticulées,
- les polysaccharides et leurs dérivés,
- les copolymères, de préférence à blocs, d'oxyde d'éthylène et d'oxyde de propylène,
- les sulphoesters,
- les lignosulfonates,
- les mélanges de ces composés.

Les lignosulfonates peuvent être sous forme acide ou sous forme de sel, en association avec un contre-ion. On peut citer les lignosulfonates de Na, K, Ca, Mg, NH₄ et tout particulièrement celui de Na, et pour des raisons économiques, celui de Ca. A titre d'exemple de lignosulfonate de calcium on peut citer la gamme Bretax commercialisée par Burgo. A titre d'exemple de lignosulfonate de sodium on peut citer le Reax 88B commercialisé par Westvaco.

Les agents liants et/ou dispersants peuvent être choisis parmi les polysaccharides et leurs dérivés, comme l'amidon, la cellulose microcristalline, la carboxyméthylcellulose de sodium réticulée, les polysaccharides du soja.

Ils peuvent être également choisis parmi les copolymères d'oxyde d'éthylène et d'oxyde de propylène, de préférence à blocs, notamment les composés présentant une masse moléculaire comprise entre 3000 et 25000 g/mol.

Les agents liants et/ou dispersants peuvent aussi être choisis parmi les composés suivants:
- les sels de métaux alcalins ou d'ammonium d'alkylnaphtalène sulfonates condensés au formol ;
- les sels de métaux alcalins ou d'ammonium de 4,4'-dihydroxybiphénylsulfonate condensés au formol ;
- les sels de métaux alcalins ou d'ammonium, de polymères comprenant au moins un monomère choisi parmi les acides, les diacides ou les anhydrides insaturés en C₃-C₅, éventuellement combinés à au moins un monomère choisi parmi les radicaux hydrocarbonés, insaturés, linéaires ou ramifiés en C₄-C₈. Plus particulièrement, on peut utiliser des polymères comprenant en tant que monomères, l'acide maléique, l'anhydride maléique, l'acide acrylique, l'acide méthacrylique, seuls ou en mélanges. Lesdits polymères peuvent de même comprendre au moins un monomère choisi parmi l'isobutylène ou le diisobutylène. Ces polymères peut se trouver sous une forme acide ou bien sous une forme de sel de métal alcalin ou d'ammonium de type N(R³)₄⁺ avec R³, identiques ou différents, représentant des atomes d'hydrogène, ou des radicaux hydrocarbonés en C₁-C₄. De préférence, le copolymère se trouve sous forme de sels de sodium. De préférence, on met en oeuvre un polymère comprenant de l'acide maléique, et/ou l'anhydride maléique combiné(s) avec l'isobutylène et/ou le diisobutylène.

On peut de même mettre en oeuvre de manière avantageuse l'association d'un sel d'alkylbenzène sulfonate (comme plus particulièrement, les alkylbenzène sulfonate, et de préférence le dodécylbenzène sulfonate, de sodium) avec le polymère précité, c'est-à-dire le polymère comprenant l'acide maléique, et/ou l'anhydride maléique combinés avec l'isobutylène et/ou le diisobutylène, de préférence sous forme d'un sel de sodium. Le rapport pondéral du sel au polymère étant plus particulièrement de 10/90.

A titre d'illustration non limitative, les agents dispersants peuvent être choisis parmi les produits suivants : le Geropon^{®} T36, le Geropon^{®} TA/72, le Geropon^{®} SC/213, le Supragil^{®} MNS/90, le Supragil^{®} GN, le Soprophor^{®} FL, le Soprophor^{®} FLK, commercialisés par Rhodia.

La quantité d'agent dispersant de la composition phytosanitaire solide est généralement comprise entre 2 et 20 % en poids, par rapport au poids total de la composition, de préférence entre 2 et 15 % en poids, par rapport à la même référence. Elle est avantageusement comprise entre 2 et 10 % en poids, par rapport au poids total de la composition phytosanitaire solide.

Des sels, de préférence des sels solubles dans l'eau, peuvent également être utilisés, par exemple pour favoriser la dispersion d'un matrice minérale agglomérée. Ils peuvent avoir une fonction d'agents de désintégration. On cite à titre de sels utiles à cet effet:
- le citrate de sodium,
- le bicarbonate de sodium,
- l'acétate de sodium,
- le métasilicate de sodium,
- les sulfates de magnésium, zinc ou calcium,
- l'hydroxyde de magnésium,
- le chlorure de calcium ou de sodium,
- le sulfate de sodium ou d'ammonium.

### Autres ingrédients

La formulation solide selon l'invention peut également comprendre des agents mouillants, des agents anti-mottant, des agents de stabilisation chimique, des charges inertes, des antimousses, des agents de stabilisation de la taille des nanoparticules ou des agents inhibiteurs de croissance des nanoparticules.

Parmi les agents mouillants convenables, on peut citer, sans intention de s'y limiter, les N-méthyl-N-oléoyl taurates ; les sels d'alkylarylsulfonates, comme les sels d'alkylbenzène sulfonates, les sels d'alkyl-diphényléther sulfonates, les sels d'alkylnaphtalène sulfonates ; les mono-alkyl sulfosuccinates, les di-alkyl sulfosuccinates ; les alkylphénols éthoxylés. Ces agents mouillants peuvent être utilisés seuls ou en mélange. On peut par exemple citer, comme agents tensioactifs mouillants, le Geropon^{®} SDS, le Geropon^{®} T/77, le Supragil^{®} NC/85, le Rhodacal^{®} DS/10, le Supragil^{®} WP, commercialisés par Rhodia. La quantité d'agent mouillant peut être comprise entre 0,5 et 10 % en poids, par rapport au poids total de la formulation solide, de préférence entre 1 et 5 % en poids, par rapport à la même référence.

Sans vouloir être lié à une quelconque théorie, on pense que les agents mouillants peuvent aider à compatibiliser le support minéral ou organique avec de l'eau qui peut être mise en oeuvre lors de la préparation de la formulation solide, en particulier lors de la préparation de poudres mouillables et de granulés dispersables dans l'eau. Ils peuvent également aider à la dispersion dans l'eau de la formulation solide.

Parmi les agents de stabilisation chimique, on peut citer, sans intention de s'y limiter, les sulfates de métaux alcalino-terreux ou de transition, l'hexamétaphosphate de sodium, le chlorure de calcium, l'anhydride borique ...,

Parmi les agents de stabilisation de la taille des nanoparticules ou agents inhibiteurs de croissance des nanoparticules, on peut citer la polyvinylpyrrolidone (PVP).

On précise qu'il est possible qu'un ingrédient exerce plusieurs fonctions dans la formulation solide. Par exemple des tensioactifs peuvent avoir un effet ou une fonction de dispersant, des ingrédients peuvent avoir un effet une fonction à la fois de dispersant et de liant, etc.

### Quantités - Physico-chimie

Le solvant, le composé amphiphile et leurs proportions sont tels que leur mélange dans les conditions d'utilisation, en présence éventuellement de la matrice organique ou d'un agent liant et/ou dispersant compris dans la matrice minérale ou organique, est au moins partiellement miscible avec l'eau.

Selon un premier test, la miscibilité avec l'eau est testée en réalisant un mélange comprenant le solvant et le composé amphiphile, sans le produit phytosanitaire, les ingrédients de la matrice organique ou minérale, puis en mettant ce mélange en présence d'eau, conformément au test des définitions ci-dessus.

Selon un deuxième test, la miscibilité avec l'eau peut être testée en réalisant un mélange comprenant le solvant et le composé amphiphile, la matrice organique (dans le cadre d'une formulation solide sous forme d'émulsion séchée), ou l'agent dispersant et/ou liant (dans le cadre d'une formulation solide sous forme de poudre mouillable ou de granulé dispersable dans l'eau), sans le produit phytosanitaire sanitaire, sans les ingrédients du support minéral matrice, puis en mettant ce mélange en présence d'eau, conformément au test des définitions ci-dessus.

On choisit le système solvant / composé amphiphile ou le système solvant / composé amphiphile / matrice organique ou le système solvant / composé amphiphile / dispersant et/ou agent liant de manière à ce que au moins un des deux tests ci-dessus soit satisfait.

Les ingrédients et leurs proportions sont par ailleurs tels que la formulation solide forme, après mélange avec de l'eau, une dispersion dans l'eau de nanoparticules comprenant le produit phytosanitaire. La formation de nanoparticules peut être testée par mélange de la formulation solide avec de l'eau, et en mettant en oeuvre une mesure conforme aux définitions ci-dessus. La formation de nanoparticules peut être testée en introduisant 0,3 parts en poids de la composition liquide pour 100 parts d'eau et/ou en introduisant 1 part en poids de granulés dans 100 parts d'eau.

Selon des modes de réalisation préférentiels:
- le rapport en poids entre le solvant et le produit phytosanitaire est compris entre 5/95 et 95/5,
- le rapport en poids entre la composition liquide et le support minéral matrice (cas de granulés dispersables dans l'eau WDG ou de poudres mouillables WP) est compris entre 0,5/1 et 3/1,
- le rapport en poids entre la matrice organique (cas d'émulsions séchées EG) et la formulation solide est inférieur à 50%.

Par ailleurs, la formulation solide comprend avantageusement au moins 1% en poids du solvant, souvent au moins 5% en poids, par exemple entre 10 et 50% en poids.

### Procédé de mise en forme de granulés

Il existe plusieurs procédés adaptés à la préparation des formulations solides selon l'invention. Les procédés de préparation de formulations solides sont connus de l'homme du métier. Naturellement, les procédés pouvant être mis en oeuvre peuvent varier, ainsi que les ingrédients, selon le type de formulation solide désiré, par exemple une émulsion séchée (EG), une poudre mouillable (WP), ou un granulé solide dispersable dans l'eau (WDG).

Selon un mode réalisation de l'invention, la formulation solide est une émulsion séchée. Un procédé adapté à la préparation d'une telle formulation comprend les étapes suivantes:
- formation d'une émulsion dans l'eau de la composition liquide, ladite émulsion comprenant le composé amphiphile, et, dans la phase aqueuse, le polymère hydrosoluble ou hydrodispersable qui formera la matrice,
- élimination de l'eau,
- récupération de la formulation solide.

Lors d'une première étape du procédé, on prépare une émulsion comprenant la composition liquide, dispersée dans la phase aqueuse. L'émulsion comprend le polymère hydrosoluble ou hydrodispersable.

Toutes les méthodes de préparation d'une émulsion peuvent être utilisées. Elles sont connues de l'homme du métier. Des méthodes sont décrites, par exemple, dans "ENCYCLOPEDIA of EMULSIONS TECHNOLOGY", volumes 1 à 3 de Paul BECHER édités par MARCEL DEKKER INC., 1983, et peuvent être mises en oeuvre dans le cadre de la présente invention.

Ainsi, la méthode dite d'émulsification en phase directe peut être utilisée. Il est rappelé brièvement que cette méthode consiste à préparer un mélange contenant l'eau et des émulsifiants (composés amphiphiles), y compris le polymère hydrosoluble ou hydrodispersable, puis à introduire la composition liquide, sous agitation.

Une autre méthode convenable est l'émulsification par inversion de phases. Selon cette voie, on mélange la composition liquide avec un émulsifiant on introduit goutte à goutte et sous agitation, l'eau pouvant contenir les autres constituants tels que le polymère hydrosoluble ou hydrodispersable par exemple. A partir d'une certaine quantité d'eau introduite, il se produit une inversion de l'émulsion. On obtient alors une émulsion directe huile dans eau. On dilue ensuite l'émulsion obtenue dans l'eau de manière à obtenir une fraction volumique en phase dispersée appropriée.

On peut enfin préparer l'émulsion en mettant en oeuvre des broyeurs colloïdaux tels que MANTON GAULIN et MICROFLUIDIZER (MICROFLUIDICS).

La taille moyenne des gouttelettes de la composition liquide dispersées dans la phase aqueuse est en général comprise entre 0,1 et 50 µm, souvent entre 1 et 10 micromètres et préférentiellement entre 0,2 et 5 micromètres (exprimée par rapport au volume de particules ; mesurée au moyen d'un granulomètre à diffraction laser de type HORIBA).

L'émulsification peut être réalisée à une température voisine de la température ambiante, bien que des températures plus faibles ou plus élevées soient envisageables.

La quantité d'eau présente dans l'émulsion, avant séchage, peut être comprise entre 5 et 99% en poids, de préférence entre 20% et 70% en poids. De manière générale on préfère utiliser de faibles quantités d'eau, car celle-ci doit être éliminée par la suite.

La méthode mise en oeuvre pour éliminer l'eau de l'émulsion et obtenir l'émulsion séchée, peut être effectuée par tout moyen connu de l'homme du métier.

Cette opération a lieu de telle sorte que les divers éléments constitutifs du mélange sont soumis à des températures inférieures à celles de leur dégradation.

Selon un mode de réalisation de l'invention, on peut envisager un séchage en étuve. De préférence, ce séchage a lieu en couche mince. Plus particulièrement, la température à laquelle est effectuée le séchage est inférieure ou égale à 100°C, de préférence comprise entre 30 et 90°C, de préférence entre 50 et 90°C.

Selon un autre mode de réalisation particulier de l'invention, on effectue un séchage dit rapide, du mélange (ou de l'émulsion). Conviennent à ce titre le séchage par atomisation, en lit fluidisé, mettant en oeuvre des tambours Duprat^{®}, ou une lyophilisation (congélation-sublimation).

Le séchage par atomisation, par exemple à l'aide d'un appareil NIRO, ou en lit fluidisé par exemple à l'aide d'un appareil AEROMATIC, peut s'effectuer de manière habituelle dans tout appareil connu tel que par exemple une tour d'atomisation associant une pulvérisation réalisée par une buse ou une turbine avec un courant de gaz chaud. La température d'entrée du gaz chaud (en général de l'air), en tête de colonne, est de préférence comprise entre 50°C et 250°C et la température de sortie est de préférence inférieure à la température de dégradation des éléments constitutifs du granulé obtenu.

Dans le cas d'opérations de séchage du mélange (ou de l'émulsion) réalisées au moyen de tambour Duprat^{®}, ou de tout moyen permettant d'obtenir rapidement un film sec qui est séparé du support séchant par une opération de raclage par exemple, on obtient des particules que l'on peut éventuellement broyer. Si nécessaire, ces particules peuvent faire l'objet d'une mise en forme ultérieure, comme une étape d'agglomération, de manière à obtenir des granulés.

Il est à noter que des additifs, tels que les agents antimottants peuvent être incorporés aux granulés au moment de cette étape de séchage.

De préférence, le séchage est effectué de telle sorte que qu'au moins 90% en poids de la phase aqueuse externe sont éliminés, de préférence entre 90 et 95 % en poids. La quantité d'eau résiduelle est de préférence inférieure à 3% en poids.

Selon un mode de réalisation de l'invention, la formulation solide est une poudre mouillable (WP). Un procédé adapté à la préparation d'une telle formulation comprend les étapes suivantes:
- mélange des composants dans un blender (ribbon blender). Eventuellement utiliser des pre-mix pour imprégnation des composants liquides.
- broyage ou micronisation à sec du mélange pour obtenir la taille désirée (hammer mill, air jet mill).

Selon un mode de réalisation de l'invention, la formulation solide est un granulé solide dispersable dans l'eau (WDG). Un procédé adapté à la préparation d'une telle formulation comprend les étapes suivantes:
- imprégnation par la composition liquide de support minéral ou organique, ledit support étant de préférence sous forme d'une poudre,
- agglomération du support imprégné, en présence de préférence d'un agent liant et/ou dispersant, de manière à obtenir des granulés.

Des procédés d'agglomérations sont connus de l'homme du métier. Ils peuvent être choisis par exemple parmi les procédés d'atomisation, les procédés d'extrusion (à relativement basse pression, inférieure à 30 p.s.i., ou à plus haute pression, supérieure à 30 p.s.i.), les procédés de granulation en lit fluide, les procédés de granulation à mélange haute vitesse, les procédé de granulation dans un drageoir (pan granulation), les procédés de compactage.

On précise que les procédés d'agglomération peuvent être mis en oeuvre en présence d'eau, qui est éliminée par la suite (typiquement à un niveau inférieur à 2% en poids), par exemple par séchage. L'agent liant et/ou dispersant peut être préalablement mélangé à cette eau. La quantité d'eau mise en oeuvre pour l'agglomération peut dépendre du procédé mis en oeuvre et de la formulation désirée. Elle peut être typiquement de 5 à 150 parts en poids pour 100 parts de support minéral ou organique et d'agent liant et/ou dispersant.

Dans le cadre d'une agglomération par atomisation, on peut par exemple opérer de la manière suivante:
- préparation d'une suspension comprenant la composition liquide absorbée ou adsorbée dans le support minéral ou organique, de l'eau, un agent liant et/ou dispersant, et éventuellement d'autres ingrédients,
- atomisation à l'aide d'un dispositif approprié,
- séchage de manière à éliminer l'eau.

Dans le cadre d'une agglomération par granulation en lit fluide, on peut par exemple opérer de la manière suivante:
- transport en lit fluide du support minéral ou organique comprenant la composition liquide absorbée ou adsorbée,
- pulvérisation sur le lit fluide d'une composition comprenant de l'eau de un agent liant et/ou dispersant, de manière à agglomérer le support,
- séchage à l'aide d'un flux d'air chaud, de manière à obtenir des granulés.

On mentionne que le procédé choisi, les conditions opératoires, et le solvant sont tels qu'il reste du solvant dans la formulation solide, de préférence dans les quantités indiquées plus haut.

### Préparation de la composition liquide:

La composition liquide, comprenant le produit phytosanitaire, le solvant, le composés amphiphile, et éventuellement d'autres ingrédients (par exemple un dispersant), peut être préparée par tout procédé permettant de mettre en présence ces composés. Selon un mode de réalisation avantageux, on prépare en premier lieu un pré-mélange comprenant le solvant, et le composé amphiphile, et éventuellement d'autres ingrédients (par exemple un dispersant). On solubilise ensuite le produit phytosanitaire dans ce pré-mélange, pour obtenir la composition liquide.

### Dispersion dans l'eau - Dispersion de nanoparticles

La formulation solide est destinée à être mélangée avec de l'eau, pour former une dispersion de nanoparticules. Le mélange avec l'eau est tel qu'on atteigne des proportions indiquées pour les traitements phytosanitaires, avec une formation de nanoparticules. L'opération de mélange est généralement mise en oeuvre par l'opérateur final, généralement un exploitant agricole. Avantageusement on mélange au moins 10 parts en poids d'eau pour 1 part en poids de formulation solide, de préférence au moins 50 parts en poids d'eau, et encore plus préférablement au moins 100 parts en poids d'eau, et parfois au moins 250 parts en poids d'eau ou même au moins 500 parts en poids d'eau.

D'autres détails ou avantages de l'invention pourront apparaître au vu de l'exemple qui suit, sans caractère limitatif.

### EXEMPLE

### a) Réalisation dune émulsion

- Dans un bécher en verre de 250ml de forme haute, on introduit 29,2 grammes de Géropon EGPM (Rhodia) qui est une solution aqueuse comprenant un polymère hydrosoluble, et on met sous agitation à l'aide d'une pale défloculeuse (D=35mm), à la vitesse de 800 tours/minutes (rpm).
- On ajoute lentement 4 grammes de Glucidex DE29 (Maltodextrine commercialisée Roquette), et on laisse sous agitation pendant 30 à 60 minutes à 800 tours/minutes.
- On ajoute lentement le système préalablement préparé, constitué de 1,86 grammes de tébuconazole solubilisé dans 6,4 grammes de Génagène 4166 (Clariant), auquel est ajouté 2,45 grammes de Rhodafac MB (Tensioactif anionique phosphate d'alcool commercialisé par Rhodia).
- On obtient alors une émulsion blanche s'épaississant légèrement.
- On ajoute goutte à goutte 2,59 grammes d'acide chlorhydrique (HCl, 2N).
- On observe un épaississement de l'émulsion.
- On agite pendant une heure et quinze minutes à 1000 tours/minutes en ayant pris la précaution de placer le bécher dans un bain d'eau froide (10°C).
- On mesure la granulométrie (Horiba)

### b) Séchage

- On répartit en couche mince l'émulsion obtenue sur un plateau et on la sèche à l'étuve à 80°C pendant trois heures et quarante minutes.
- On récupère l'émulsion séchée que l'on broie grossièrement.

### c) Redispersion, caractérisation

- On mesure la granulométrie lors d'une re-dispersion (1 g de poudre dans 50 ml d'eau de ville, avec un agitateur electro-magnétique, à 500 tours/minutes pendant 5 minutes à température ambiante à l'aide d'un granulomètre Horiba).
- On mesure également le rayon hydrodynamique des particules obtenues par diffusion de la lumière effectué sur un Malvern ALV CGS-3 (les concentrations utilisées sont de 2,5g/l). Les mesures sont faites à 90° et 135° d'angle. La fonction d'autocorrélation permet d'aboutir à deux valeurs: le diamètre hydrodynamique moyen pondéré par l'intensité diffusée, et un indice de polydispersité (sans dimension), qui est proche de zéro pour un échantillon monodisperse.
- Enfin, on caractérise les particules obtenues par Microscopie électronique à transmission après avoir déposé sur grille la dispersion et laissé séché cette dernière.

La formulation est indiquée dans le tableau ci-dessous où figurent en colonnes les noms commerciaux des produits utilisés, leurs extraits secs, les masses introduites et enfin l'équivalent en sec (masse et pourcentage) correspondant.

| | E.S. | Masse | Sec | |
|---|---|---|---|---|
| | % | g | g | % |
| Géropon EGPM | 25,0% | 29,20 | 7,30 | 32,88% |
| Glucidex DE19 | 100,0% | 4,00 | 4,00 | 18,02% |
| HCl 2N (73g/l) | 7,3% | 2,59 | 0,19 | 0,85% |
| Rhodafac MB | 100,0% | 2,45 | 2,45 | 11,04% |
| Tébuconazole | 100,0% | 1,86 | 1,86 | 8,38% |
| Genagene 4166 | 100,0% | 6,40 | 6,40 | 28,83% |
| Eau (complément pour viscosité finale) | 0,0% | 0,00 | 0,00 | 0,00% |
| | *Total* = | 46,5 | 22,2 | 100% |

### Emulsion avant séchage

- Extrait Sec: 47,7 %

### Granulométrie avant séchage (Horiba): bipopulée

| Fines : | Grosses : |
|---|---|
| D10 = 0,59 µm | D10 = 5,8 µm |
| D50 = 1,16 µm | D50 = 13,2 µm |
| D90 = 2,36 µm | D90 = 23,0 µm |
| (D90-D10)/D50 = 1,52 | (D90-D10) / D50 = 1,3 |

### Dispersion après séchage

### Granulométrie Horiba

D10 = 216 nm
D50 = 322 nm
D90=543nm
(D90-D10)/D50=0,74

### Diffusion de la lumière

| **angle 90°** | **<Φₕ>_{Int.diff.}** | | **angle 135°** | **<Φₕ>_{Int.diff.}** |
|---|---|---|---|---|
| 2,5 g/l | 323,0 | | 2,5 g/l | 290,0 |
| | | | | |

| **angle 90°** | **Indice de Polydispersité** | | **angle 135°** | **Indice de Polydispersité** |
|---|---|---|---|---|
| 2,5 g/l | 0,23 | | 2,5 g/l | 0,29 |

Les diamètres moyens obtenus à 135°C sont plus faibles qu'à 90° en raison de la polydispersité : les populations les plus grosses contribuent davantage au signal à 90° qu'à 135°. L'intervalle de diamètres où l'on attend une distribution pondérée par le volume est compris entre 150nm à 350nm en accord avec les mesures de granulométrie.

### Microscopie électronique à transmission

La microscopie électronique fait apparaître des particules agglomérées sous l'effet du séchage pour cette caractérisation, les particules ayant une fois de plus une taille proche de celles mesurées précédemment.

## Revendications

1. Formulation solide comprenant une composition liquide comprenant un produit phytosanitaire solide non soluble dans l'eau, dispersée, absorbée ou adsorbée, dans une matrice organique ou minérale, **caractérisée en ce que**:
- le produit phytosanitaire est non-hydrosoluble à 25°C,
- la composition liquide comprend:
- au moins 5 parts en poids, de préférence au moins 50 parts, du produit phytosanitaire,
- un solvant dans lequel le produit phytosanitaire est solubilisé, et
- 100 parts en poids d'au moins un composé amphiphile,
- le solvant, le composé amphiphile et leurs proportions étant tels que leur mélange dans les conditions d'utilisation, en présence éventuellement de la matrice organique ou d'un agent liant et/ou dispersant compris dans la matrice minérale ou organique, est au moins partiellement miscible avec l'eau,
- et **en ce que** la formulation solide forme, après mélange avec de l'eau, une dispersion dans l'eau de nanoparticules comprenant le produit phytosanitaire.

2. Formulation selon la revendication précédente **caractérisée en ce que** les nanoparticules ont une taille médiane en poids ou volume inférieure à 1060 nm, de préférence inférieure à 600 nm, et de préférence supérieure à 100 nm.

3. Formulation selon l'une des revendications précédentes **caractérisée en ce que** au moins 75% en poids ou volume des nanoparticules ont une taille inférieure à 1060 nm, de préférence inférieure à 400 nm.

4. Formulation selon l'une des revendications précédentes, **caractérisée en ce que** c'est une émulsion séchée (EG) comprenant une matrice organique dans laquelle sont dispersées des inclusions de la composition liquide.

5. Formulation selon l'une des revendications précédentes, **caractérisée en ce que** la matrice organique est un polymère hydrosoluble ou hydrodispersable choisi parmi l'alcool polyvinylique, les amidons éventuellement modifiés, les copolymères d'acide (meth)acrylique ou d'anhydride maléique et de di-isobutylène.

6. Formulation solide selon l'une des revendications 1 à 3, **caractérisée en ce que** c'est:
- une poudre mouillable (WP) comprenant un support minéral ou organique matrice dans lequel est absorbée ou adsorbée la composition liquide, et comprenant un agent favorisant la dispersion du support minéral ou organique dans de l'eau, ou
- un granulé solide dispersable dans l'eau (WDG), comprenant un agglomérat d'un support minéral ou organique matrice dans lequel est absorbée ou adsorbée la composition liquide, et comprenant éventuellement un agent liant et/ou favorisant la dispersion dans l'eau du support minéral ou organique.

7. Formulation selon la revendication 6, **caractérisée en ce que** le support est un support minéral matrice choisi parmi:
- de la silice, de préférence une silice de précipitation,
- des composés minéraux comprenant du phosphore,
- des silicates ou métasilicates de composés alcalins ou alcalino-terreux,
- des carbonates de composés alcalins ou alcalino-terreux,
- du noir de carbone,
- des argiles, ou
- des mélanges de ces composés, ou

8. Formulation selon l'une des revendications 6 ou 7, **caractérisée en ce que** le support est un support est une silice de précipitation présentant une prise d'huile DOP d'au moins 200 ml/g.

9. Formulation selon l'une des revendications 6 à 8, **caractérisée en ce qu'**elle comprend un agent liant et/ou favorisant la dispersion, ledit agent étant choisi parmi:
- les polymères hydrosolubles, de préférence les polycarboboxylates, leurs dérivés et/ou copolymères,
- les condensats de naphatlene sulfonates,
- les polymères naphtalènesulfonate/formaldéhyde condensés (sels de sodium ou d'ammonium,
- les condensats de phenyl sulfonates (sels de sodium d'acides phenyllsulfoniques),
- les polyvinyl pyrrolidone réticulées,
- les polysaccharides et leurs dérivés,
- les copolymères, de préférence à blocs, d'oxyde d'éthylène et d'oxyde de propylène,
- les sulphoesters,
- les lignosulfonates,
- les mélanges de ces composés.

10. Formulation selon l'une des revendications 6 à 9, **caractérisée en ce qu'**elle comprend au moins un sel soluble dans l'eau.

11. Formulation selon l'une des revendications précédentes **caractérisée en ce que** le composé amphiphile est choisi parmi:
- les tensioactifs comprenant un groupe hydrophile et un groupe hydrophobe, et
- les copolymères à blocs, de préférence les copolymère diblocs ou triblocs comprenant au moins un bloc hydrophile et au moins un bloc hydrophobe, de préférence les copolymères à blocs dont au moins un bloc, de préférence au moins deux, dérivant de monomères ethylèniquement insaturés.

12. Formulation selon la revendication 9, **caractérisée en ce que** le tensioactif est choisi parmi les tensioactifs anioniques, sous forme salifiée ou neutre, les tensioactifs non ioniques, de préférence polyalcoxylés, et leurs mélanges.

13. Procédé de préparation d'une dispersion de nanoparticles comprenant un produit phytosanitaire, **caractérisé en ce qu'**il comprend une étape de mélange de la formulation solide selon l'une des revendications précédentes avec de l'eau.

14. Procédé selon la revendication précédente, **caractérisé en ce que** le mélange est d'au moins 100 parts en poids d'eau pour 1 part de formulation solide.

## Patentansprüche

1. Feste Formulierung umfassend eine flüssige Zusammensetzung, umfassend ein festes, nicht in Wasser lösliches Pflanzenschutzprodukt, dispergiert, absorbiert oder adsorbiert in einer organischen oder mineralischen Matrix, **dadurch gekennzeichnet, dass**:
- das Pflanzenschutzprodukt bei 25°C nicht wasserlöslich ist,
- die flüssige Zusammensetzung umfasst:
- mindestens 5 Gewichtsteile, bevorzugt mindestens 50 Teile des Pflanzenschutzprodukts,
- ein Lösungsmittel, in dem das Pflanzenschutzprodukt solubilisiert ist, und
- 100 Gewichtsteile mindestens einer amphiphilen Verbindung,
- wobei das Lösungsmittel, die amphiphile Verbindung und ihre Anteile derart sind, dass ihr Gemisch unter den Anwendungsbedingungen gegebenenfalls in Gegenwart der organischen Matrix oder eines Bindemittels und/oder Dispergiermittels, das in der mineralischen oder organischen Matrix enthalten ist, mindestens teilweise mit Wasser mischbar ist,
- und dadurch, dass die feste Formulierung nach dem Mischen mit Wasser eine Dispersion von Nanopartikeln, die das Pflanzenschutzprodukt umfassen, in dem Wasser bildet.

2. Formulierung nach dem vorhergehenden Anspruch, dadurch gekenntzeichnet, dass die Nanopartikel eine gewichtsmittlere oder volumenmittlere Größe kleiner 1.060 nm, bevorzugt kleiner 600 nm und bevorzugt größer 100 nm aufweisen.

3. Formulierung nach einem der vorhergehenden Ansprüche, **dadurch gekennzeichnet, dass** mindestens 75 Gew.- oder Vol.-% der Nanopartikel eine Größe kleiner 1.060 nm, bevorzugt kleiner 400 nm aufweisen.

4. Formulierung nach einem der vorhergehenden Ansprüche, **dadurch gekennzeichnet, dass** es sich um eine getrocknete Emulsion (EG) handelt, umfassend eine organische Matrix, in der Einschüsse der flüssigen Zusammensetzung dispergiert sind.

5. Formulierung nach einem der vorhergehenden Ansprüche, **dadurch gekennzeichnet, dass** die organische Matrix ein wasserlösliches oder in Wasser dispergierbares Polymer ist, ausgewählt aus Polyvinylalkohol, gegebenenfalls modifizierten Stärken, Copolymeren von (Meth)acrylsäure oder Maleinsäureanhydrid und Di-isobutylen.

6. Feste Formulierung nach einem der Ansprüche 1 bis 3, **dadurch gekennzeichnet, dass**:
- ein benetzbares Pulver (WP), umfassend einen mineralischen oder organischen Matrix-Träger, in dem die flüssige Zusammensetzung absorbiert oder adsorbiert ist, und umfassend ein Mittel, das die Dispersion des mineralischen oder organischen Trägers in Wasser fördert, oder
- ein festes Granulat, das in Wasser dispergierbar ist (WDG), umfassend ein Agglomerat aus einem mineralischen oder organischen Matrix-Träger, in dem die flüssige Zusammensetzung absorbiert oder adsorbiert ist, und gegebenenfalls umfassend ein Bindemittel und/oder ein Mittel, das die Dispersion des mineralischen oder organischen Trägers in Wasser fördert.

7. Formulierung nach Anspruch 6, **dadurch gekennzeichnet, dass** der Träger ein mineralischer Matrix-Träger ist, ausgewählt aus:
- Kieselsäure, bevorzugt gefällter Kieselsäure,
- Phosphor umfassenden mineralischen Verbindungen,
- Silikaten oder Metasilikaten von alkalischen oder erdalkalischen Verbindungen,
- Carbonaten von alkalischen oder erdalkalischen Verbindungen,
- Kohlenstoffschwarz,
- Tonen oder
- Gemischen dieser Verbindungen oder

8. Formulierung nach einem der Ansprüche 6 oder 7, **dadurch gekennzeichnet, dass** der Träger ein Träger aus einer gefällten Kieselsäure ist, der eine Ölzahl DOP von mindestens 200 ml/g aufweist.

9. Formulierung nach einem der Ansprüche 6 bis 8, **dadurch gekennzeichnet, dass** sie ein Bindemittel und/oder ein Mittel, das die Dispersion fördert umfasst, wobei das Mittel ausgewählt ist aus:
- wasserlöslichen Polymeren, bevorzugt Polycarboboxylaten, ihren Derivaten und/oder Copolymeren,
- Naphtali.nsulfonatkondensaten,
- mit Formaldehyd kondensierten Naphtalinsulfonat-Polymeren (Natrium- oder Ammoniumsalze),
- Phenylsulfonatkondensaten (Natriumsalze von Phenylsulfonsäuren),
- vernetzten Polyvinylpyrrolidonen,
- Polysacchariden und deren Derivaten,
- Copolymeren, bevorzugt Block-Copolymeren aus Ethylenoxid und Propylenoxid,
- Sulfoestern,
- Lignosulfonaten,
- Gemischen dieser Verbindungen.

10. Formulierung nach einem der Ansprüche 6 bis 9, **dadurch gekennzeichnet, dass** sie mindestens ein in Wasser lösliches Salz umfasst.

11. Formulierung nach einem der vorhergehenden Ansprüche, **dadurch gekennzeichnet, dass** die amphiphile Verbindung ausgewählt ist aus:
- Tensiden, umfassend eine hydrophile Gruppe und eine hydrophobe Gruppe, und
- Block-Copolymeren, bevorzugt Diblock- oder Triblock-Copolymeren, umfassend mindestens einen hydrophilen Block und mindestens einen hydrophoben Block, bevorzugt die BlockCopolymere, bei denen mindestens ein Block, bevorzugt mindestens zwei Blöcke von ethylenisch ungesättigten Monomeren abgeleitet ist bzw. sind.

12. Formulierung nach Anspruch 9, **dadurch gekennzeichnet, dass** das Tensid ausgewählt ist aus den anionischen Tensiden in einer in ein Salz überführten oder neutralen Form, den nichtionischen, bevorzugt polyalkoxylierten Tensiden und deren Gemischen.

13. Verfahren zur Herstellung einer Dispersion aus Nanopartikeln, umfassend ein Pflanzenschutzprodukt, **dadurch gekennzeichnet, dass** es einen Schritt zum Mischen der festen Formulierung nach einem der vorhergehenden Ansprüche mit Wasser umfasst.

14. Verfahren nach dem vorhergehenden Anspruch, dadurch gekenntzeichnet, dass das Gemisch aus mindestens 100 Gewichtsteilen Wasser für 1 Teil feste Formulierung besteht.

## Claims

1. A solid formulation comprising a liquid composition comprising a water-insoluble solid plant-protection product dispersed in or absorbed or adsorbed onto an organic or mineral matrix, **characterized in that**:
- the plant-protection product is water-insoluble at 25°C,
- the liquid composition comprises:
- at least 5 parts by weight and preferably at least 50 parts by weight of the plant-protection product,
- a solvent in which the plant-protection product is dissolved, and
- 100 parts by weight of at least one amphiphilic compound,
- the solvent, the amphiphilic compound and the proportions thereof being such that their mixture under the conditions of use, optionally in the presence of the organic matrix or of a binder and/or dispersant included in the mineral or organic matrix, is at least partially water-miscible,
- and **in that** the solid formulation forms, after mixing with water, a dispersion in the water of nanoparticles comprising the plant-protection product.

2. The formulation as claimed in the preceding claim, **characterized in that** the nanoparticles have a weight or volume median size of less than 1060 nm, preferably less than 600 nm and preferably greater than 100 nm.

3. The formulation as claimed in one of the preceding claims, **characterized in that** at least 75% by weight or volume of the nanoparticles are smaller than 1060 nm and preferably smaller than 400 nm.

4. The formulation as claimed in one of the preceding claims, **characterized in that** it is a dried emulsion (EG) comprising an organic matrix in which are dispersed inclusions of the liquid composition.

5. The formulation as claimed in one of the preceding claims, **characterized in that** the organic matrix is a water-soluble or water-dispersible polymer chosen from polyvinyl alcohol, optionally modified starches, and copolymers of (meth)acrylic acid or of maleic anhydride and of diisobutylene.

6. The solid formulation as claimed in one of claims 1 to 3, **characterized in that** it is:
- a wettable powder (WP) comprising a matrix mineral or organic support onto which the liquid composition is absorbed or adsorbed, and comprising an agent for promoting the dispersion of the mineral or organic support in water, or
- a water-dispersible solid granule (WDG), comprising an agglomerate or a matrix mineral or organic support onto which the liquid composition is absorbed or adsorbed, and optionally comprising a binder and/or an agent for promoting the dispersion in the water of the mineral or organic support.

7. The formulation as claimed in claim 6, **characterized in that** the support is a matrix mineral support chosen from:
- silica, preferably a precipitation silica,
- mineral compounds comprising phosphorus,
- silicates or metasilicates of alkali metal or alkaline-earth metal compounds,
- carbonates of alkali metal or alkaline-earth metal compounds,
- carbon black,
- clays, or
- mixtures of these compounds.

8. The formulation as claimed in either of claims 6 and 7, **characterized in that** the support is a precipitation silica with a DOP oil uptake of at least 200 ml/g.

9. The formulation as claimed in one of claims 6 to 8, **characterized in that** it comprises a binder and/or agent for promoting dispersion, said agent being chosen from:
- water-soluble polymers, preferably polycarboxylates, and derivatives and/or copolymers thereof,
- naphthalenesulfonate condensates,
- condensed naphthalenesulfonate/formaldehyde polymers (sodium or ammonium salts),
- phenylsulfonate condensates (sodium salts of phenylsulfonic acids),
- crosslinked polyvinylpyrrolidones,
- polysaccharides and derivatives thereof,
- copolymers, preferably block copolymers, of ethylene oxide and of propylene oxide,
- sulfoesters,
- lignosulfonates,
- mixtures of these compounds.

10. The formulation as claimed in one of claims 6 to 9, **characterized in that** it comprises at least one water-soluble salt.

11. The formulation as claimed in one of the preceding claims, **characterized in that** the amphiphilic compound is chosen from:
- surfactants comprising a hydrophilic group and a hydrophobic group, and
- block copolymers, preferably diblock or triblock copolymers, comprising at least one hydrophilic block and at least one hydrophobic block, preferably block copolymers in which at least one block, preferably at least two blocks, are derived from ethylenically unsaturated monomers.

12. The formulation as claimed in claim 9, **characterized in that** the surfactant is chosen from anionic surfactants, in salified or neutral form, and nonionic surfactants, which are preferably polyalkoxylated, and mixtures thereof.

13. A process for preparing a dispersion of nanoparticles comprising a plant-protection product, **characterized in that** it comprises a step of mixing the solid formulation as claimed in one of the preceding claims with water.

14. The process as claimed in the preceding claim, **characterized in that** the mixture is of at least 100 parts by weight of water per 1 part of solid formulation.
